**Europäisches Patentamt**

**(19)** **European Patent Office**

**Office européen des brevets**

**(11)** Publication number : **0 431 709 B1**

## **(12)** EUROPEAN PATENT SPECIFICATION

**(45)** Date of publication of patent specification :
**11.11.92 Bulletin 92/46**

**(51)** Int. Cl.$^5$ : **A23J 7/00**

**(21)** Application number : **90203207.7**

**(22)** Date of filing : **06.12.90**

**(54)** Process for the supercritical solvent extraction of a mixture of phosphatides.

**(30)** Priority : **08.12.89 EP 89250110**

**(43)** Date of publication of application :
**12.06.91 Bulletin 91/24**

**(45)** Publication of the grant of the patent :
**11.11.92 Bulletin 92/46**

**(84)** Designated Contracting States :
**BE DE FR GB NL**

**(56)** References cited :
**EP-A- 0 156 374**
**EP-A- 0 195 991**
**EP-A- 0 259 836**

**(73)** Proprietor : **N.V. VANDEMOORTELE INTERNATIONAL**
**Kennedypark 8**
**B-8500 Kortrijk (BE)**

**(72)** Inventor : **De Kock, Jan**
**Nieuwstraat 63, bus 1**
**B-9470 Denderleeuw (BE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a supercritical solvent extraction process of a mixture of phosphatides yielding a fraction enriched in phosphatidic acid.

Supercritical solvent extraction is known per se and has been applied in different extraction processes including decaffeination of raw coffee, the fractionation of oils and fats and the extraction and fractionation of essential oils with supercritical carbon dioxide.

A process for the recovery of phosphatidyl choline from a phosphatide mixture by means of supercritical solvent extraction is described by Peter in DE-A-36 30 676. In this process, a phosphatide mixture is dissolved in monoacyl- and/or diacylglycerides as entrainer. This solution is extracted counter-currently with an extraction solvent consisting of a supercritical component and an additional entrainer under conditions at which the extraction solvent is supercritical, combined with a partial recycling of the extract. The phosphatidyl choline is then separated from the raffinate, and subsequently purified by extracting the glycerides. The extraction solvent used in this process consists of supercritical carbon dioxide and propane as an additional entrainer, whereas the supercritical conditions of temperature and pressure vary from 30 to 80°C and 70 to 200 bar. However, this process does not provide a route to a fraction in which phosphatidic acid is the main constituent.

Because phosphatidic acid has never been obtained in a relatively pure form on industrial scale, its application is limited. However, on a laboratory scale, phosphatidic acid has been found to be a suitable starting material for semisynthetic phosphatides. In addition, phosphatidic acid can be neutralised with for instance ammonia to yield ammonium phosphatidate, a viscosity lowering agent for chocolate, which is only available as a fully synthetic product. Also, because of its outstanding emulsifying properties, a number of applications presents itself.

A process for producing gums with a relatively high phosphatidic acid content is described in US-A-4,698,185. In a first stage of this process, a non-toxic aqueous acid, e. g. phosphoric acid, is finely dispersed in water-degummed oils, which oils still contain a relatively high content of non-hydratable phosphatides, and sufficient contact time is allowed to complete the decomposition of the metal salts of phosphatidic acid. In a second stage, a base is added to increase the pH to above 2.5 without substantial formation of soap and in a third stage the aqueous phase containing the gums and the oil phase are separated. This process yields gums of a relatively high phosphatidic acid content, but they also contain inorganic salts, which are difficult to remove.

Several processes have been developed for increasing the phosphatidic acid content of phosphatide mixtures.

One of these processes comprises the treatment of phosphatide mixtures with phospholipase D. A serious drawback of this process is the limited availability of the enzyme.

Another process is described in co-pending application EP-A- 372 327. In this process, phosphatide mixtures are fractionated into two or more fractions which are enriched in one or more of phosphatidyl choline (PC), phosphatidyl ethanolamine (PE), phosphatidyl inositol (PI) and phosphatidic acid (PA), by carrying out the following steps:

a) extracting the phosphatide mixture one or more times with a solvent selected from $C_1$ to $C_3$ alcohols or mixtures thereof having a water content in the range of 0 to 20% by weight,

b) separating the solvent phase from the extraction residue and recovering the residue,

c) recovering the extracted phosphatide(s) from the solvent phase by precipitating the phosphatide(s) and/or removing the solvent, and optionally

d) subjecting one or more of the fractions obtained in steps b) and c) to a further treatment in accordance with steps a) to c) at a different solvent acidity,

and by

controlling the solubilities of PC, PE and PA by suitably adjusting the acidity of the solvent,

the pH being adjusted to above 8 and preferably above 9 for solubilizing PC and PE,

the pH beeing adjusted to below 5, preferably below 3 and more preferably below 2 for solubilizing PA,

PI being substantially insoluble and thus mainly recovered in the extraction residue.

Although the above process provdides a considerable advance in the art, it is not yet completely satisfactory since it requires a multitude of steps to arrive at just more or less pure PA.

## OBJECTS OF THE INVENTION

Therefore, it is an object of the invention to provide an improved process for the extraction of mixtures of phosphatides that yields a fraction with phosphatidic acid as main constituent.

It is an additional object of the invention to provide an extraction process capable of handling mixtures of phosphatides, which mixtures may also contain acylglycerides, free fatty acids, water and salts.

It is a further object of the invention to provide a process for the extraction of mixtures of phosphatides comprising a minimal number of steps.

Other objects and advantages of the present invention will be apparent from the following description.

## DETAILED DESCRIPTION OF THE INVENTION

The invention is directed to a supercritical solvent extraction process of a mixture of phosphatides, which mixture may also comprise acylglycerides, water and salts, yielding a fraction that is enriched in phosphatidic acid as described herein and in the dependent claims, whereby use is made of the observation that the solubility of phosphatidic acid in the supercritical solvent can be influenced by adjusting the pH.

The process according to the invention is a process for the supercritical solvent extraction of a mixture of phosphatides wherein the supercritical solvent comprises carbon dioxide and a suitable entrainer, characterized by acidifying the mixture of phosphatides to a pH below 4 before supercritical solvent extraction takes place and recovering a fraction enriched in phosphatidic acid.

In comparison to atmospherical solvent extraction the solubility of the components of the mixture to be extracted and/or the selectivity of the extraction process can be further varied in supercritical solvent extraction processes by adjusting the pressure. When lecithin or any mixture of phosphatides containing acylglycerides is mixed with a supercritical solvent, a two-phase system results. The upper solvent layer contains acylglycerides and those phosphatides that are soluble under the prevailing conditions. The lower, residue layer contains the phosphatides that are poorly soluble and the remainder of the acylglycerides. The distribution of the various compounds is governed by the supercritical solvent composition, type of entrainer, pressure and temperature (see e.g. S. Peter, Stofftrennung mit überkritischen Fluiden, Fette, Seifen, Anstrichmittel, No. 4, **1983**, 135 - 142).

It has now surprisingly been found that phosphatidic acid, which is only poorly soluble in the supercritical upper layer at non-adjusted pH, becomes much more soluble by increasing the acidity to a pH below 4, and preferably between 1 and 2.

Supercritical carbon dioxide is used as the extraction solvent because it is food-grade and cheap. However, since the solubility of the components in supercritical carbon dioxide is rather poor, addition of a suitable entrainer to the supercritical carbon dioxide is found to be necessary. Several carbon dioxide-entrainer mixtures have been examined and have been found to vary in effectiveness. Lower alcohols are more effective for the purpose of the invention than for instance acetone or any alkane. Besides, such lower alcohols are generally permitted in food applications. Preferably, carbon dioxide-ethanol mixtures are applied, because of easy solvent removal.

As already mentioned, in addition to phosphatides (often also referred to as phospholipids or glycerophosphatides), the starting material may also contain acylglycerides (this term comprises mono-, di-, and triglycerides) and other components normally associated with its isolation. Gums resulting from water-degumming crude vegetable oils, lecithin and de-oiled lecithin are suitable starting materials, but because of their limited phosphatidic acid content, a preferred starting material is provided by the process according to US-A-4,698,185.

In a preferred manner of execution, an amount of entrainer is dissolved in the starting material. This is critical where the starting material is too viscuous to be pumped, and this manner of execution has the further advantage, that the acidity can be established reproducibly by the reading of a pH-electrode.

Acid is added to this starting mixture in order to increase the acidity to a pH below 4, preferably between 1 and 2. It is immaterial which acid is used in the process according to the invention; however it is preferably non-toxic. All or part of the entrainer can be added to the acidified starting material, as a component of the supercritical solvent. The weight ratio of entrainer to starting material generally lies between 1:4 and 2:1, preferably between 1:2 and 1:1.

The vessel to be used for the supercritical extraction must be a pressure vessel and able to withstand pressures of 500 bar, and preferably 1000 bar. The operation pressure for the process according to the invention generally lies between 150 and 450 bar, and preferably between 200 and 400 bar. In addition, temperature must be controlled to above the supercritical temperature, which is preferably in the range of 40 to 80°C. Extraction may be carried out countercurrently or as a batch process. The latter requires a suitable mixing device.

The weight ratio of carbon dioxide to entrainer generally lies between 9:1 and 3:2, preferably between 5:1 and 2:1. The upper layer containing triglycerides and dissolved phosphatides is separated from the residue, without the pressure in the vessel being lowered, optionally combined with a partial recycling of the residue.

Gradually lowering the pressure of the upper layer fraction results in the fractionation of dissolved compounds. Phosphatides are precipitated while triglycerides still remain in solution. The same effect can be achieved by gradually increasing the temperature of the supercritical upper layer fraction. This has the further advantage that, while working in a continuous process, processing costs can be reduced by applying heat exchangers.

In optimizing the process and assessing the fractions obtained, the analytical method for the determination of the phosphatide composition is of importance (see also copending Application EP-A- 372 327. For routine analysis, samples were compared with a known standard.

The standard's phosphatide composition was determined by two-dimensional thin layer chromatography followed by spot revelation, scraping off individual spots, decomposition of the phosphatides thus isolated to inorganic phosphates, which phosphates then where converted into a reduced phosphomolybdate complex, the amount of which was measured spectroscopically.

Silica gel TLC-plates (20 x 20 cm, 2.5 mm) were rinsed with chloroform/methanol (2/1), air-dried and activated for 30 min. at 110°C. The sample was diluted with chloroform/methanol (2/1) to a phosphorus content of 2000 - 4000 ppm and 10-20 microliter of this solution was spotted. The plate was developed with chloroform/ methanol/ammonia (28%) (65/40/5) and air-dried until no more ammonia was observed. Subsequently, the plate was developed a second time in a perpendicular direction using chloroform/acetone/methanol/acetic acid water (50/20/10/15/5) and air-dried. The spots containing phosphorus were visualized with Vaskovsky reagent and outlined with a pencil. Spots, as well as a blank, were collected by aspiration (Rouser, Siakatos and Fleischer, Lipids 1, 85-86, 1966). The phosphatides thus collected were hydrolysed by the addition of 0.26 ml perchloric acid (70%) and heated 30 min. at 180°C. After cooling, 1.5 ml of distilled water, 0.25 ml of ammonium molybdate (2.5%) and 0.25 ml ascorbic acid (10%) were mixed into the solution, whereupon the test tubes were maintained at 40°C for one hour. Solids present were removed by centrifuge (2 min. at 1000 g) and the adsorption was measured at 820 nm.

For routine analyses a faster method was preferred, employing one-dimensional TLC and densitometric quantitation. HPTLC-plates were activated at 110°C and 9 separations per plate, including 3 standards, were performed, spotting 1 microliter of 40 mg/ml solution. The plates were developed with chloroform/acetone/methanol/acetic acid/water (20/8/4/6/3) and air-dried in a ventilated oven at 60°C for 30 min. Subsequently, the spots were revelated by immersing the plates in a 0.1% solution of 8-anilino, 1-naphthalene sulphonic acid and dried for 25 min. at 40°C. The scanning was carried out using a Desaga DC 60 densitometer with mercury lamp at 367 nm, filter position at 450 nm, a slit width of 0.04 mm and a slit height of 6.0 mm. The use of three known standards with different concentration allowed calibration and calculation of the composition of the unknown samples.

The supercritical carbon dioxide phase equilibria apparatus (SITEC) used for the experiments consists of a 20 ml vessel, which can be pressurized using a manual pump. During sample taking, the vessel pressure is automatically maintained by volume compensation, so as to avoid a shift in the equilibrium conditions. A sample of the supercritical upper layer is collected in a weighed glass tube, which is cooled by means of liquid nitrogen. This glass tube is connected to an air bag in order to collect the amount of carbon dioxide evaporated when bringing the sample to atmospherical conditions, after samples have been taken.

Since the density of carbon dioxide at 1 atm. is $1,815 \text{ kg/m}^3$ and the density of air at 1 atm. is $1,18 \text{ kg/m}^3$, the absolute weight of carbon dioxide equals measured weight x 2.86. The amount of entrainer is estimated, by weighing the sample prior to and after the evaporation of the entrainer under vacuum.

The invention is illustrated by the following Examples:

Example 1 (comparative example):

Approximately 5 g of a mixture of lecithin (80 wt.%) and ethanol (20 wt.%), is introduced into the 20 ml vessel of the apparatus, as well as an amount of ethanol (entrainer) and 1 ml of water.

The acidity of the mixture is defined as the reading of a pH-electrode immersed in the mixture at atmospherical conditions. This turned out to be quite reproducible and is therefore suitable for process control.

The vessel is closed and pressurized with carbon dioxide by means of the manual pump to the desired pressure. After rinsing the sample valve with a small amount of the upper phase and restoring the pressure, the supercritical fluid is stirred for 30 min., avoiding contamination of the sample valve, followed by the sample-taking as explained above.

The operation conditions, the composition of the starting mixtures, the composition of the upper phases, and the phosphatide content of the extracts are summarized in Table 1. The phosphatide composition of the extracts is summarized in Table 4.

## Table 1

| Sample | | 1 | 2 | 3 | 4 | 5 |
|---|---|---|---|---|---|---|
| **Operation conditions:** | | | | | | |
| Pressure | (bar) | 250/260 | 250/260 | 300/310 | 350/360 | 350/360 |
| Temperature | (°C) | 50 | 80 | 50 | 80 | 80 |
| Acidity | (pH) | 5.50 | 5.50 | 5.50 | 5.50 | 5.50 |
| **Starting mixture composition:** | | | | | | |
| Lec/eth (80/20 g) | | 5.35 | 5.36 | 5.67 | 5.36 | 5.53 |
| $H_2O$ | (ml) | 1.00 | 1.00 | 1.00 | 1.00 | 1.00 |
| EtOH | (ml) | 2.00 | 2.00 | 2.00 | 2.00 | 4.00 |
| Tot. EtOH | (g) | 2.67 | 2.67 | 2.73 | 2.67 | 4.31 |
| **Upper phase composition:** | | | | | | |
| $CO_2$ | (wt.%) | 81.77 | 84.38 | 74.97 | 75.93 | 80.84 |
| EtOH | (wt.%) | 14.78 | 13.05 | 18.31 | 16.25 | 15.01 |
| Extract | (wt.%) | 3.45 | 2.57 | 6.72 | 7.82 | 4.15 |
| **Phosphatide content extract:** | | | | | | |
| PC | (wt.%) | 2.15 | 2.88 | 3.80 | 5.02 | 5.98 |
| PE | (wt.%) | 1.20 | 1.30 | 2.02 | 2.73 | 2.85 |
| PI | (wt.%) | 0.00 | 0.29 | 0.10 | 0.60 | 1.04 |
| PA | (wt.%) | 0.56 | 1.12 | 1.04 | 1.64 | 2.20 |
| Sum | (wt.%) | 3.91 | 5.59 | 6.96 | 9.99 | 12.07 |

The remainder comprising mainly triglycerides.

The above tables clearly illustrate that the solubility of phosphatides in the supercritical solvent is governed by the composition of the supercritical solvent (amount of entrainer), by its pressure and its temperature.

When comparing Samples 1 and 2, which samples only differ in that the temperature has been increased by 30 °C, it is clear that the solubility of phosphatides in the supercritical solvent-entrainer mixture has practically doubled.

When comparing Samples 1 and 3, and Samples 2 and 4, which pairs of samples differ only in that the pressure has been increased, it is clear that the amount of phosphatides dissolved in the supercritical solvent has increased.

When comparing Samples 4 and 5, which samples differ only in that the amount of entrainer has been increased, it is clear that the amount of phosphatides dissolved in the supercritical solvent has increased.

Example 2

Approximately 5 g of an acidified mixture of lecithin (80 wt.%) and ethanol (20 wt.%), is introduced into the 20 ml vessel of the apparatus, as well as ethanol (entrainer) and water. The same procedure as in Example 1 is repeated.

The operation conditions, the composition of the starting mixtures, the composition of the upper phases, as well as the phosphatide content of the extracts are summarized in Table 2. The phosphatide composition of the extracts is summarized in Table 4.

## Table 2

| Sample | | 4 | 6 | 7 |
|---|---|---|---|---|
| **Operation conditions:** | | | | |
| Pressure | (bar) | 350/360 | 350/360 | 350/360 |
| Temperature | (°C) | 80 | 80 | 80 |
| Acid | | none | citric | HCl |
| Acidity | (pH) | 5.50 | 4.14 | 2.54 |
| **Starting mixture composition:** | | | | |
| Lec/eth (80/20 g) | | 5.36 | 5.32 | 5.35 |
| $H_2O$ | (ml) | 1.00 | 0.80 | 0.90 |
| EtOH | (ml) | 2.00 | 2.00 | 2.00 |
| Tot. EtOH | (g) | 2.67 | 2.66 | 2.67 |
| **Upper phase composition:** | | | | |
| $CO_2$ | (wt.%) | 75.93 | 74.90 | 66.14 |
| EtOH | (wt.%) | 16.25 | 16.78 | 20.51 |
| Extract | (wt.%) | 7.82 | 8.32 | 13.35 |
| **Phosphatide content extract:** | | | | |
| PC | (wt.%) | 5.02 | 4.31 | 7.07 |
| PE | (wt.%) | 2.73 | 2.54 | 3.59 |
| PI | (wt.%) | 0.60 | 0.43 | 1.70 |
| PA | (wt.%) | 1.64 | 2.44 | 4.30 |
| Sum | (wt.%) | 9.99 | 9.72 | 16.66 |

The remainder comprising mainly triglycerides.

These tables illustrate the importance of the acidity of the supercritical fluid. When comparing mixtures 4, 6, 7, a phosphatidic acid yield improvement is observed.

Example 3

Approximately 5 g of an acidified mixture of lecithin (80 wt.%) and ethanol (20 wt.%) is introduced into the 20 ml vessel of the apparatus, as well as ethanol (entrainer) and water. The same procedure as in Example 1 is repeated.

The operation conditions, the composition of the starting mixtures, the composition of the upper phases, as well as the phosphatide content of the extracts are summarized in Table 3. The phosphatide composition of the extract is summarized in Table 4.

## Table 3

| Sample | | **1** | **8** | **9** | **10** |
|---|---|---|---|---|---|
| **Operation conditions:** | | | | | |
| Pressure | (bar) | 250/260 | 250/260 | 250/260 | 260/270 |
| Temperature | (°C) | 50 | 50 | 50 | 50 |
| Acid | | none | citric | HCl | HCL |
| Acidity | (pH) | 5.50 | 4.14 | 2.54 | 1.41 |
| **Starting mixture composition:** | | | | | |
| Lec/eth (80/20 g) | | 5.35 | 5.56 | 5.65 | 5.63 |
| $H_2O$ | (ml) | 1.00 | 0.80 | 0.90 | 0.80 |
| EtOH | (ml) | 2.00 | 2.00 | 2.00 | 2.00 |
| Tot. EtOH | (g) | 2.67 | 2.71 | 2.73 | 2.73 |
| **Upper phase composition:** | | | | | |
| $CO_2$ | (wt.%) | 81.77 | 77.54 | 74.69 | 81.81 |
| EtOH | (wt.%) | 14.78 | 16.67 | 18.99 | 13.92 |
| Extract | (wt.%) | 3.45 | 5.79 | 6.32 | 4.27 |
| **Phosphatide content extract:** | | | | | |
| PC | (wt.%) | 2.15 | 3.22 | 3.39 | 1.19 |
| PE | (wt.%) | 1.20 | 1.69 | 1.72 | 0.79 |
| PI | (wt.%) | 0.00 | 0.16 | 0.38 | 0.00 |
| PA | (wt.%) | 0.56 | 1.52 | 2.00 | 3.14 |
| Sum | (wt.%) | 3.91 | 6.59 | 7.49 | 5.12 |

The remainder comprising mainly triglycerides.

These tables illustrate the importance of the acidity of the supercritical fluid. When comparing mixtures 1, 8, 9, and 10, a phosphatidic acid yield improvement is observed.

### Table 4

| Sample | pH | PC | PE | PI | PA |
|--------|------|-------|-------|-------|-------|
| 1 | 5.50 | 54.99 | 30.69 | 0.00 | 14.32 |
| 2 | 5.50 | 51.52 | 23.26 | 5.19 | 20.04 |
| 3 | 5.50 | 54.60 | 29.02 | 1.44 | 14.94 |
| 4 | 5.50 | 50.25 | 27.33 | 6.01 | 16.42 |
| 5 | 5.50 | 49.54 | 23.61 | 8.62 | 18.23 |
| 6 | 4.14 | 44.34 | 26.13 | 4.42 | 25.11 |
| 7 | 2.54 | 42.44 | 21.55 | 10.20 | 25.81 |
| 8 | 4.14 | 48.86 | 25.64 | 2.43 | 23.07 |
| 9 | 2.54 | 45.26 | 22.96 | 5.07 | 26.71 |
| 10 | 1.41 | 23.24 | 15.43 | 0.00 | 61.33 |

From Table 4, it is clear that not only a yield improvement is observed by increasing acidity, however, the selectivity of the supercritical solvent for the extraction of phosphatidic acid is definitely enhanced (compare Samples 9 and 10).

**Claims**

1. Process for the supercritical solvent extraction of a mixture of phosphatides wherein the supercritical solvent comprises carbon dioxide and a suitable entrainer characterized by acidifying the mixture of phosphatides to a pH below 4 before supercritical solvent extraction takes place and recovering a fraction enriched in phosphatidic acid.

2. Process according to claim 1 in which the mixture of phosphatides is acidified to a pH between 1 and 2.

3. Process according to claim 1 or 2 in which the entrainer is a lower alcohol.

4. Process according to claim 3 in which the entrainer is ethanol.

5. Process according to any preceeding claim in which the weight ratio of entrainer to starting material is between 1:4 and 2:1.

6. Process according to claim 5 in which the weight ratio of entrainer to starting material is between 1:2 and 1:1.

7. Process according to any preceeding claim in which the weight ratio of carbon dioxide to entrainer is between 9:1 and 3:2.

8. Process according to claim 7 in which the weight ratio of carbon dioxide to entrainer is between 5:1 and 2:1.

**Patentansprüche**

1. Verfahren zur Extraktion eines Gemisches von Phosphatiden mit überkritischem Lösungsmittel, bei dem das überkritische Lösungsmittel Kohlendioxid und einen geeigneten Schlepper umfaßt, dadurch gekennzeichnet, daß das Gemisch der Phosphatide auf einen pH-Wert unter 4 angesäuert wird, bevor die Extraktion mit überkritischem Lösungsmittel stattfindet, und eine Fraktion gewonnen wird, in der Phosphatidsäure angereichert ist.

2. Verfahren nach Anspruch 1, bei dem das Gemisch von Phosphatiden auf einen pH-Wert zwischen 1 und 2 angesäuert wird.

3. Verfahren nach Anspruch 1 oder 2, bei dem der Schlepper ein niederer Alkohol ist.

4. Verfahren nach Anspruch 3, bei dem der Schlepper Ethanol ist.

5. Verfahren nach einem der vorangehenden Ansprüche, bei dem das Gewichtsverhältnis von Schlepper zu Ausgangsmaterial zwischen 1:4 und 2:1 ist.

6. Verfahren nach Anspruch 5, bei dem das Gewichtsverhältnis von Schlepper zu Ausgangsmaterial zwischen 1:2 und 1:1 ist.

7. Verfahren nach einem der vorangehenden Ansprüche, bei dem das Gewichtsverhältnis von Kohlendioxid zu Schlepper zwischen 9:1 und 3:2 ist.

8. Verfahren nach Anspruch 7, bei dem das Gewichtsverhältnis von Kohlendioxid zu Schlepper zwischen 5:1 und 2:1 ist.

## Revendications

1. Procédé pour l'extraction par solvant supercritique d'un mélange de phosphatides, où le solvant supercritique comprend de l'anhydride carbonique ou dioxyde de carbone et un agent d'entraînement convenable, caractérisé en ce que l'on acidifie le mélange de phosphatides jusqu'à un pH inférieur à 4 avant que l'extraction du solvant supercritique ait lieu et on récupère une fraction enrichie en acide phosphatidique.

2. Procédé suivant la revendication 1, caractérisé en ce que l'on acidifie le mélange de phosphatides jusqu'à un pH qui varie de 1 à 2.

3. Procédé suivant la revendication 1 ou 2, caractérisé en ce que l'agent d'entraînement est un alcool inférieur.

4. Procédé suivant la revendication 3, caractérisé en ce que l'agent d'entraînement est l'éthanol.

5. Procédé suivant l'une quelconque des revendications précédentes, caractérisé en ce que le rapport pondéral de l'agent d'entraînement à la matière de départ varie de 1:4 à 2:1.

6. Procédé suivant la revendication 5, caractérisé en ce que le rapport pondéral de l'agent d'entraînement à la matière de départ varie de 1:2 à 1:1.

7. Procédé suivant l'une quelconque des revendications précédentes, caractérisé en ce que le rapport pondéral de l'anhydride carbonique ou dioxyde de carbone à l'agent d'entraînement fluctue de 9:1 à 3:2.

8. Procédé suivant la revendication 7, caractérisé en ce que le rapport pondéral de l'anhydride carbonique ou dioxyde de carbone à l'agent d'entraînement fluctue de 5:1 à 2:1.